# EUROPEAN PATENT APPLICATION

(11) **EP 4 116 092 A2**
(43) Date of publication of application: **11.01.2023**
(21) Application number: 21764620.7
(22) Date of filing: 16.02.2021
(51) Int. Cl.: B32B 27/08, B32B 15/08, B32B 7/12, C09D 7/61, E06B 9/28

(54) **HARD COATING FILM**

(30) Priority: 04.03.2020 KR 20200027176
(71) Applicant: Sung, Chihun, Gyeongsangbuk-do 37946 (KR)
(72) Inventor: Sung, Chihun, Gyeongsangbuk-do 37946 (KR)
(74) Representative: M. Zardi & Co S.A.
(86) International application number: PCT/KR2021/001962
(87) International publication number: WO 2021/177629

(57) **Abstract**

The present invention relates to a hard coating film, and blinds comprising same. The hard coating film, which is one aspect of the present invention, has no curling phenomenon that occurs when a coating layer is cured, and has no blocking phenomenon that occurs when the film is wound using a roll or the like. That is, the hard coating film of the present invention has excellent structural stability, processability, and storability.

## Description

### [TECHNICAL FILED]

The present invention relates to a hard coating film, and blinds comprising same.

### [BACKGROUND ART]

Blinds are a kind of light-shielding film installed on a glass window to block the light entering through the glass window or to prevent the interior from being seen from the outside.

The plastic material used for blinds is generally produced by applying a thin coating onto one surface in order to improve scratches that occur on the surface. However, such materials have a problem that a phenomenon of being rolled due to structural imbalance, curing of the coating layer and/or shrinkage by exposure to sunlight, so-called a curling phenomenon appeared. Thus, a material subjected to the same coating onto both surfaces of the plastic has been developed, but the curling phenomenon still occurs. When winding the blinds using this, a problem was found in which a blocking phenomenon appeared due to contact between materials. In order to solve these problems, a material treated with a slip agent has also been developed, but there was a problem that not only it is not possible to obtain functionally satisfactory effects, but also the appearance of the finished plastic material is deteriorated due to a decrease in transparency, etc. and the marketability is lowered.

(Patent Literature 1) KR 10-2005-0004231 A

### [DETAILED DESCRIPTION OF THE INVENTION]

### [Technical Problem]

An object of the present invention is to provide a hard coating film having no curling phenomenon.

Another object of the present invention is to provide a hard coating film having no deformation due to curing.

Yet another object of the present invention is to provide a hard coating film having no blocking phenomenon even without containing a slip agent.

### [Technical Solution]

In order to achieve the above object, according to the present invention, there is provided a hard coating film which is used for blinds, wherein the hard coating film comprises: a first substrate layer; a first hard coating layer formed on one surface of the first substrate layer; a second hard coating layer formed on the opposite side surface of the first hard coating layer with respect to the first substrate layer; a second substrate layer formed on one surface of the first hard coating layer or the second hard coating layer; and a metal layer formed between the first hard coating layer or the second hard coating layer and the second substrate layer.

### [Advantageous Effects]

The hard coating film, which is one aspect of the present invention, has no curling phenomenon that occurs when a coating layer is cured, and has no blocking phenomenon that occurs when the film is wound using a roll or the like. That is, the hard coating film of the present invention has excellent structural stability, processability, and storability.

### [BRIEF DESCRIPTION OF THE DRAWINGS]

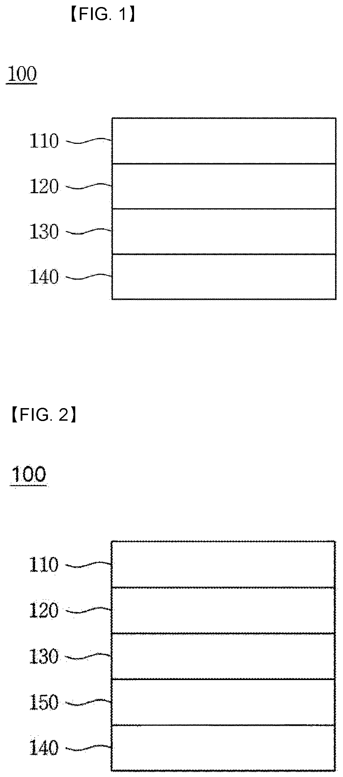

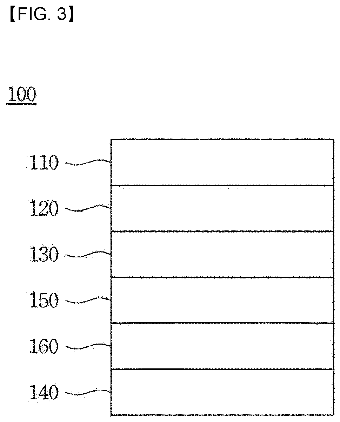

FIGS. 1 to 3 are cross-sectional views of a hard coating film according to an embodiment of the present invention.

### [DETAILED DESCRIPTION OF THE EMBODIMENTS]

Historically, it is said that modern blinds, especially blinds with horizontal slits (wings) have been made from wood because they need to effectively block the direct sunlight that shines down from the sky and the light that is reflected on the surface of water, in Venice - city on the water.

Since then, aluminum material blinds currently commercially available were developed and released by Hunter Douglas in the United States in 1946, expanding the range of blind materials, and then, blinds using thin fabrics or having rods acting as heavy weights also appeared.

However, despite the various advantages of the blinds, there was a disadvantage that they cannot see the scenery outside the window. Therefore, since the 1990s, attempts have been made to develop new blinds using plastic films that have the same functions as existing blinds while clearly viewing the outside scenery.

In particular, the plastic film has high potential in terms of performance, such as not only being able to ensure a certain level of transparency while selectively shielding light through multiple treatments, thus capable of seeing the outside scenery, but also making it impossible to see the inside from the outside. The plastic film has also attracted a considerable attention in the industry because it is a material that can be highly competitive in terms of price.

Therefore, in the early 1990s, several blind manufacturers released film blinds whose whole surfaces were made of a single sheet of film, and these plastic film blinds were excellent in visibility and sharpness in seeing the outside scenery.

However, blinds using a plastic film are encountered with the following critical issues. Specifically, plastic film blinds encounters with a critical issue in using as a blind material, and this issue was that in order to prevent scratches due to friction between plastic materials, a scratch-resistant coating (hard coating) must be applied to the plastic surface, but it could not be used as blinds due to the "curling" phenomenon appearing in the hard coating.

In other words, generally, blinds are installed inside the window and door, wherein the film blinds have excellent visibility unlike conventional blinds, but due to the use characteristics of blinds that are often unfolded and folded, there was a problem that the surface of the film was scratched due to friction between materials. Thus, it was necessary to apply a scratch-resistant coating because the surface of a normal plastic film is weak in durability and easily scratched. However, when an anti-scratch coating is applied to the exposed surface of the interior indoors of the film, another problem that caused the curling phenomenon occurred.

Therefore, improving the curling phenomenon in plastic film blinds is a long-standing issue in the industry, and global blind specialists have been conducting multifaceted research to improve the curling phenomenon.

Since the 1990s, many companies have developed products that partially overcome the curling phenomenon while using films with a scratch-resistant coating (hard coating) or corresponding treatments through sustained and multifaceted efforts. Among them, the main products are as follows.

First, in order to improve the curling problem, there are many films that have unevenness such as embossing on the whole of one sheet of film. However, these embossing products had the problems that it causes dizziness in the internal user's eyes, and that it is very difficult to ensure transparency and sharpness and thus, the advantage of plastic film blinds is almost non-existent.

Second, as another option to use the hard-coated laminated film itself without embossing, but avoid the curling problem, a film blind product has been released in which the whole of one sheet of film is folded and wrinkled at intervals of about 2 to 4 cm in width.

Third, the embossed film still had the problem of curling, and a gap between the embossed films was slightly increased, but a product in which the wrinkles were folded in parallel was also released.

However, such a wrinkle-type blind impairs visibility, reduces the durability of the blind due to wrinkles, and does not show a significant improvement in solving the curling problem.

Looking at the major companies selling these products, there may be mentioned HAVERKAMP (www.haverkamp.de) and 'Multifilm Sun and Glare Protection GmbH, which have more than 40 years of history in Germany.

HAVERKAMP (www.haverkamp.de) exhibited the Sun Screen System called 'OPALVARIO' at an exhibition in early 2000, where they also exhibited a number of film blind products. Looking at OPALVARIO, a film blind product from HAVERKAMP, there may be mentioned roller blind systems, pleated systems, vertical blinds and panel screens.

Looking at a product called DERSCHUTZ from Multifilm Korea (www.multifilm.co.kr) that sells films made by the German company 'Multifilm Sun and Glare Protection GmbH', a film made by making embossed irregularities and folding it in the width direction, similar to HAVERKAMP, is being released as a blind.

For several years, the applicant company has developed and applied various types of concave and convex methods in order to develop a film for blinds that can be completely used as a single sheet while applying a hard coating to make it difficult to scratch, or made numerous attempts, such as developing and testing products through various chemical treatments, and finally completed the present invention based on the numerous failures.

At the beginning of last year, several years after the start of the present invention, a method of applying a hard coating treatment onto both side surfaces was finally devised. At first, several attempts were made to apply a hard coating treatment onto both side surfaces of the film at the time of hard coating. However, if the anti-scratch coating is applied on both sides in this way, there was problem that when the laminated and finished film is wound on a roll, it is difficult to again unwind due to the blocking phenomenon after it is wound once, thus making it impossible to produce, and further it could not be used even more as a roll blind. And it was difficult to completely solve the curl problem.

After that, they went back to another method of imparting unique unevenness like other companies, and tried to impart slip properties to prevent blocking by putting particles in the scratch-resistant hard coating layer. However, this has the drawback of reducing the visibility and sharpness, which are the unique characteristics of film blinds. Therefore, the disadvantages of the existing fabric blinds or plastic blinds could not be completely overcome.

After that, the technical concept of the present invention was finally conceived and completed, and the present invention was completed after numerous experiments.

The present invention will be now described in detail.

Each configuration will be described in more detail below, but this is only an example, and the scope of the present invention is not limited by the following contents.

In one aspect, there is provided a hard coating film which is used for blinds, wherein the hard coating film comprises: a first substrate layer; a first hard coating layer formed on one surface of the first substrate layer; a second hard coating layer formed on the opposite side surface of the first hard coating layer with respect to the first substrate layer; and a second substrate layer formed on one surface of the first hard coating layer or the second hard coating layer.

The expressions such as "first, second" as used herein are only for clearly explaining the configuration, and are not intended to limit the degree of importance, stacking order, and the like.

For example, the hard coating film of the present invention may include a second substrate layer located at the lowermost end, a second hard coating layer located on the upper end of the second substrate layer, a first substrate layer located on the upper end of the second hard coating layer, and a first hard coating layer located on the upper end of the first substrate layer.

In one aspect, the hard coating film of the present invention includes the structure as described above, thereby capable of control the rolling or curling phenomenon due to the curing of the hard coating layer and controlling the blocking phenomenon that occurs in a general film when the film is wound using a roll or the like for the production or storage of the film.

In another aspect, the hard coating film may include may further include a metal layer formed between the first hard coating layer or the second hard coating layer and the second substrate layer.

That is, the hard coating film of the present invention may include a second substrate layer located at the lowermost end, a metal layer located on the upper end of the second substrate layer, a second hard coating layer located on the upper end of the metal layer, a first substrate layer located on the upper end of the second hard coating layer and a first hard coating layer located on the upper end of the first substrate layer.

In one aspect, the hard coating layer may have a hardness (pencil hardness) measured by JIS K5400 or the like of 1H or more, preferably 2H. When the hardness of the hard coating layer satisfies the above, peeling and cracking phenomena during film processing and rolling up can be minimized.

In addition, the thickness of the first hard coating layer and the second hard coating layer may be 0.5 to 5*µ*m (micrometer), preferably 1 to 4*µ*m, or may be 1.5 to 3.5*µ*m.

In one aspect, the hard coating layer may include an ultraviolet curing resin, but is not limited thereto, and may include an electron beam curing resin, a thermosetting resin, and the like, .

Further, the first coating layer and the second coating layer may further include inorganic particles. The inorganic particles may include, but not limited to, carbon black, ATO, silica, titanium dioxide, aluminum oxide, talc, sericite, mica, and the like.

In one aspect, when the inorganic particles are included in the coating layer, the blocking phenomenon during friction between films can be minimized by improving slip properties, and the reflectance to solar light can be reduced. On the other hand, when organic particles such as polymethyl methacrylate and ethyl acrylate are included, the same effect as the present invention cannot be obtained.

In one aspect, the hard coating film includes the structure as described above, whereby the film does not need to contain an anti-slip agent, which can thus solve the phenomenon of increased opacity or decreased sharpness of the film due to the anti-slip agent, and the separation phenomenon between layers.

For example, when there is no substrate layer located at the lowermost end of the hard coating film, or there is the hard coating layer on both surfaces of the outermost layer where the hard coating film is exposed to the external environment, the blocking phenomenon occurs.

The inorganic particles may be included in an amount of 0.01 to 3% by weight, preferably 0.05 to 2% by weight, or 0.05 to 1.5% by weight, or 0.01 to 1% by weight, or 0.01 to 0.5% by weight, or 0.01 to 0.07% by weight based on the total weight of the first hard coating layer or the second hard coating layer

When the content of the inorganic particles included in the hard coating layer satisfies the above range, the most excellent effect of improving slip properties can be obtained.

Further, in one aspect, the hard coating layer may include carboxylates, preferably bismuth carboxylates.

When the hard coat layer contains bismuth carboxylate, a significantly improved hardness improvement effect can be exhibited.

The carboxylates included in the hard coating layer may be contained in an amount of 0.0001 to 0.001% by weight, preferably 0.0005 to 0.001 % by weight, based on the total weight of the first hard coating layer or the second hard coating layer..

The metal layer may include aluminum, copper, silver, or an alloy thereof.

In one aspect, the hard coating film may include a monomer having a polar functional group such as a thiol group, a hydroxyl group, a carboxyl group, an isocyanate group, and an ether group so as to enhance the bonding force between the metal layer and other layers (substrate layer, hard coating layer, etc.).

The metal layer may include a deposition layer, and in this case, the metal layer may be formed through sputtering, pulsed laser deposition (PLD), electron beam evaporation, thermal evaporation, or the like.

When the hard coating film includes a metal layer, it can exhibit excellent heat-shielding and heat-insulating effects.

Additionally, the hard coating film may further include an adhesive layer. For example, the adhesive layer may be located between the first hard coating layer or the second hard coating layer and the second substrate layer.

The adhesive layer may further include A dye or the like that has the ability to absorb or reflect sunlight, in addition to an acrylic pressure sensitive adhesive (PSA, Pressure Sensitive Adhesive, Wooin Chemtech WA240) adhesive component.

Further, the adhesive layer may further include a pigment or a heat-blocking agent in addition to the adhesive component. The pigment may include inorganic pigments such as carbon black, and organic pigments such as anthraquinone, monoazo, diazo, phthalocyanine, indigoid, perylene, and pyranthrone quinacridone based pigments. Their content can be used from 1% by weight to 50% by weight depending on color tone and physical properties. In addition, the heat shielding agent include indium tin oxide (ITO), antimony tin oxide (ATO), cadmium stannate (CTO), aluminum zinc oxide (AZO), gallium tin oxide (GTO), Mn-doped tin oxide (MTO), carbon black and the like. The pigment or heat shielding agent may be included in an amount of 1 to 50% by weight based on the total weight of the adhesive used in the adhesive layer.

In one aspect, the first substrate layer and the second substrate layer may include plastic. For example, the material of the first substrate layer and the second substrate layer may be polyethylene (PE), polypropylene (PP), polystyrene (PS), polyethylene terephthalate (PET) or polyamide (PA), preferably PET.

The thickness of the substrate layer may be 10 ~ 70*µ*m (micrometer). The thickness of the first substrate layer and the second substrate layer may be different. For example, the thickness of the first substrate layer may be 10 ~ 30*µ*m, and in this case, the thickness of the second substrate layer may be 40 ~ 60*µ*m.

In one aspect, the hard coating film may be used for blinds, but is not limited thereto. The blinds may refer to a structure that is rolled or folded to thereby perform functions such as blocking sunlight and protecting privacy.

Hereinafter, the present invention will be described in more detail with reference to Preparation Examples and Examples. It will be apparent to those of ordinary skill in the art that these Preparation Examples and Examples are for illustrative purposed only, and the scope of the present invention is not to be construed as being limited thereby.

### <PREPARATION EXAMPLE>

### <Preparation Example 1> Preparation of Examples

50g of commercially available hard coating agent containing UV curing agent (Wooin Chemtech WS1050), 50 g of methyl ethyl ketone and 70 g of toluene were mixed to prepare a hard coating agent for use in the first hard coating layer and the second hard coating layer. 50 *µ*m PET was used as the first substrate layer, and a first hard coating layer was formed to a thickness of 3 *µ*m on the upper portion of the first substrate layer through micro gravure coating at a line speed of 40 m/min, and then a first hard coating layer was formed through UV curing. Also, a second hard coat layer was formed to a thickness of 3 *µ*m under the first substrate material layer using the same method.

Further, a separate PET with a thickness of 23 *µ*m was used as the second substrate layer, aluminum was deposited on the upper part of the second substrate layer, and laminated to the lower end of the second hard coating layer. For the adhesive used during lamination, 0.8wt% of carbon black and 10wt% of inorganic pigment (Orient Chemical Pigment BLUE) were mixed with a general adhesive (acrylic pressure-sensitive adhesive, Wooin Chemtech WA240) used for plastic lamination.

Further, 1 wt% of carbon black was added to the first hard coating layer, and 0.3 wt% of ATO (antimony tin oxide) was added to the second hard coating layer.

### <Preparation Example 2> Preparation of Comparative Example

### <Preparation Example 2-1> Comparative Example 1

One surface of a 50*µ*m PET film was treated with a hard coating agent having the same composition as in Preparation Example 1 to form a hard coating having a thickness of 3*µ*m, aluminum was deposited on the opposite side thereof, and then PET having a thickness of 23 *µ*m was laminated to prepare a film.

### <Preparation Example 2-2> Comparative Example 2

A film was prepared in the same manner as in Comparative Example 2-1, except that in Preparation Example 2-1, a PET film of 100 *µ*m was used instead of a PET film of 50 *µ*m.

### <Preparation Example 2-3> Comparative Example 3

One surface of a 23*µ*m thick PET film was treated with a hard coating agent having the same composition as in Preparation Example 1 to form a 3*µ*m thick hard coat layer, PSA color adhesive coating was applied onto the opposite side thereof, and a release paper was laminated to prepare a film.

### <Preparation Example 2-4> Comparative Example 4

One surface of a 23 *µ*m thick PET film was treated with a hard coating agent having the same composition as in Preparation Example 1 to form a 5 *µ*m thick hard coating layer, a 23 *µ*m thick PET film was laminated while coating a color adhesive onto the opposite side thereof. Subsequently, PSA adhesive coating was applied onto the outer surface of the laminated PET, and a release film was laminated to prepare a film.

### <Preparation Example 2-5> Comparative Example 5

A film was prepared by hard coating with a thickness of 5 *µ*m, except that a 23 *µ*m thick PET film and another 23 *µ*m thick PET film were laminated, and then the hard coating agent having the same composition as in Preparation Example 1 was treated on both outsides and subjected to hard coating to a thickness of 5 *µ*m to prepare a film.

### <Experimental example>

### <Experimental Example 1> Confirm whether curling occurs

It was confirmed whether curling occurred in the Examples and Comparative Examples 1 to 5 prepared above.

In order to confirm the curling of the film, a film with a width of 1.5 m was made as a blind, and lowered to 1.5 m or more. The width direction was set as a horizontal line with respect to the lowered midpoint, and a vertical line was set in the curling direction. The length rising to the vertical line from both ends of the film was measured. That is, the distance vertically raised from a horizontally flat position in the middle of the film width with respect to the end of the film was measured.

As a result, in the case of the films of Examples, the curling phenomenon did not occur at all, but in Comparative Examples, curling occurred, and particularly, in Comparative Examples 1 to 4, severe curling phenomenon was confirmed.

**[Table 1]**

| | Prepar ation Exampl e 1 | Compar ative Exampl e 1 | Compar ative Exampl e 2 | Compar ative Exampl e 3 | Compar ative Exampl e 3 | Compar ative Exampl e 3 |
|---|---|---|---|---|---|---|
| Whet her or not curlin 9 occur red | No curling occurre d 5cm | Curling occurre d 5cm | Curling occurre d 5cm | Curling occurre d 5cm | Curling occurre d 3cm | Curling occurre d less than 5cm |

### <Experimental Example 2> Confirmation of blocking phenomenon

It was confirmed whether or not the curling phenomenon occurred in Examples and Comparative Example 5 prepared above. In order to confirm the blocking phenomenon (phenomenon in which two films adhere to together without slipping when they come into contact with each other), when the film prepared in Comparative Example 5 was wound in a roll state and the wound film is moved sideways, it can confirm a phenomenon in which the film cannot be rewound in a state where it sticks and does not move.

As a result, it could be confirmed that in the case of Examples, there was no blocking phenomenon, but in Comparative Example 5, it was confirmed that severe blocking phenomenon occurred.

### <Experimental Example 3> Measurement of Hardness

The hard coating film was drawn 5 times in a size of 10 mm using a pencil hardness measuring instrument in accordance with JIS K5400, and then the presence or absence of scratches on the surface of the coating surface was confirmed.

As a result, in the case of Preparation Example 1 (Example), it was confirmed that the hardness was 3H.

Additionally, a hard coating film was prepared in the same manner as in Preparation Example 1 and the hardness was measured by the same method, except that in Preparation Example 1, bismuth carboxylate was added (0.0001 wt%, 0.0005 wt%, 0.0007 wt%, 0.001 wt%, 0.01 wt%) when preparing the hard coating agent.

As a result, it exhibited a hardness of 3H upon addition of 0.0001 wt% of carboxylate, a hardness of 4H upon addition of 0.005 wt%, a hardness of 6H upon addition of 0.007 wt%, a hardness of 4H upon addition of 0.001 wt%, and a hardness of 4H upon addition of 0.01 wt %.

## Claims

1. A hard coating film which is used for blinds,
wherein the hard coating film comprises:
a first substrate layer;
a first hard coating layer formed on one surface of the first substrate layer;
a second hard coating layer formed on the opposite side surface of the first hard coating layer with respect to the first substrate layer;
a second substrate layer formed on one surface of the first hard coating layer or the second hard coating layer; and
a metal layer formed between the first hard coating layer or the second hard coating layer and the second substrate layer.

2. The hard coating film according to claim 1, wherein:
the first hard coating layer and the second hard coating layer comprise an ultraviolet curable resin.

3. The hard coating film according to claim 2, wherein:
the first hard coating layer or the second hard coating layer further comprises inorganic particles,

4. The hard coating film according to claim 2, wherein:
the first hard coating layer or the second hard coating layer further comprises an adhesive layer.

5. The hard coating film according to claim 1, wherein:
the first hard coating layer and the second hard coating layer has a thickness of 0.5~5*µ*m

6. The hard coating film according to claim 1, wherein:
the first substrate layer and the second substrate layer have a plastic.
